# EUROPÄISCHE PATENTSCHRIFT

(11) **EP 1 400 735 B1**
(45) Veröffentlichungstag und Bekanntmachung des Hinweises auf die Patenterteilung: **15.06.2005**
(21) Anmeldenummer: 03017318.1
(22) Anmeldetag: 31.07.2003
(51) Int. Cl.: F16J 15/12

(54) **Flachdichtung**
Gasket
Dispositif d'étanchéité

(30) Priorität: 21.09.2002 DE 10244008
(43) Veröffentlichungstag der Anmeldung: 24.03.2004
(73) Patentinhaber: Federal-Mogul Sealing Systems GmbH, 57562 Herdorf (DE)
(72) Erfinder: Flemming, Ralf, 57520 Langenbach (DE)

(56) Entgegenhaltungen:
- EP-A- 0 450 419
- DE-A- 2 048 569
- DE-A- 3 939 572
- US-A- 4 126 318
- US-A- 5 145 190
- US-A- 5 873 578
- PATENT ABSTRACTS OF JAPAN vol. 2002, no. 08, 5. August 2002 (2002-08-05) & JP 2002 122240 A (ISHIKAWA GASKET CO LTD), 26. April 2002 (2002-04-26)

## Beschreibung

Die Erfindung betrifft eine Flachdichtung, insbesondere Zylinderkopfdichtung, für Verbrennungskraftmaschinen mit in den Durchgangsöffnungen, insbesondere Flüssigkeitsdurchgangsöffnungen, eingesetzten an den Öffnungsrändern der Durchgangsöffnungen befestigten Dichtelementen, wobei am, dem jeweiligen Öffnungsrand zugewandten Umfangsbereich der Dichtelemente den Öffnungsrand zumindest partiell umgreifende Vorsprünge vorgesehen sind.

Eine gattungsgemäße Flachdichtung ist der DE-A 39 03 918 zu entnehmen. Selbige weist in die Durchgangsöffnungen eingesetzte ringförmige Dichtelemente aus Metall auf, die an den Öffnungsrändern der Flachdichtung befestigt sind. Die Dichtelemente sind über im Querschnitt etwa U-förmige axial beabstandete, radial gerichtete lappenartige Vorsprünge an der Flachdichtung befestigt. Zum Zwecke der Montage kann ein Schenkel des lappenförmigen Vorsprunges einseitig nach außen weisend abgebogen werden, so dass das ringförmige Dichtelement in die Durchgangsöffnung eingesetzt werden kann. Danach wird der vorher aufgebogene Schenkel zurückgebogen, so dass er mit Spannung auf der Dichtung am Öffnungsrand aufliegt und das Dichtelement drehfest und haltbar an der Dichtung befestigt und vor dem Herausfallen gesichert ist. Diese Art der Befestigung wird als aufwendig angesehen, wobei unter Umständen durch das mehrfache Verbiegen der jeweiligen Schenkel auch abgerissen werden kann.

Der DE-A 20 48 569 ist eine Dichtung zum Abdichten ruhender Flächen, insbesondere eine Flanschdichtung, zu entnehmen, bestehend aus einem äußeren Metallring und daran angeschlossenem Dichtungsring aus Gummi oder Kunststoff. Der Dichtungsring weist außenseitig eine umlaufende Ringnut auf, in die der Metallring eingesetzt ist. Innenseitig ist der Dichtungsring mit U-förmigen Dichtungslippen versehen.

Durch die DE-A 39 39 572 ist eine Flachdichtung, insbesondere Zylinderkopfdichtung für Verbrennungskraftmaschinen, bekannt geworden, mit in mindestens einer der Durchgangsöffnungen eingesetzten und an den Öffnungsrändern befestigten Einsatzringen aus Metall. Die Einsatzringe besitzen am Außenumfang durch Prägen der Einsatzringe erzeugte und von der Unterkante und der Oberkante der Einsatzringe radial nach außen vorstehende lappenartige Vorsprünge. Die Flachdichtung besitzt am Öffnungsrand, korrespondierend zu den montageseitigen Vorsprüngen, Ausnehmungen, durch die beim Einsetzen der Einsatzringe die montageseitigen Vorsprünge verschoben werden, so dass die Einsatzringe nach dem Verdrehen um einen Winkel an der Flachdichtung befestigt sind. Die Vorsprünge der Einsatzringe werden vor der Montage axial nach außen stehend aufgebogen, wobei selbige nach der Montage in die Dichtung einplaniert sind. Diese Druckschrift ist ähnlich wie die bereits angeführte DE-A 39 03 918 zu werten und weist die gleichen Nachteile auf.

Der Erfindung liegt die Aufgabe zugrunde, die im gattungsbildenden Teil beschriebene Flachdichtung dahingehend weiterzubilden, dass der Montageaufwand hinsichtlich Positionierung und/oder Fixierung der Dichtelemente vereinfacht wird.

Die Aufgabe wird dadurch gelöst, dass an mindestens einem den Vorsprüngen radial etwa gegenüberliegenden Umfangsbereiche radial nach innen weisende Ansätze vorgesehen sind, durch deren Betätigung eine in axialer Richtung wirkende Bewegung der Vorsprünge herbeiführbar ist.

Vorteilhafterweise werden an das aus einem Elastomermaterial gebildete Dichtelement zusätzliche Laschen (Ansätze) anvulkanisiert. Selbige dienen zur Verformung (Aufspreizung) der die Außenkontur bildenden, insbesondere U-förmig ausgebildeten Vorsprünge. Infolge der Hebelwirkung kann eine derartige Aufspreizung realisiert werden, dass die Vorsprünge problemlos auf den jeweiligen Dichtungsrand aufgebracht werden können. Die Spreizung wird durch Loslassen der Ansätze wieder zurückgenommen und die Dichtung ist gegenüber der zugehörigen Durchgangsöffnung, insbesondere Flüssigkeitsdurchgangsöffnung, positioniert und fixiert.

Bedarfsweise können mehrere derartiger Spreizungsbereiche am Umfang des Dichtelementes vorgesehen werden.

Zusätzlich oder alternativ zu den weiteren Ansätzen können auch einseitig wirkende Laschen (Ansätze) als Auflageelemente auf mindestens einer Dichtungslage zum Einsatz gelangen. Des weiteren besteht die Möglichkeit, am äußeren Umfang (beispielsweise) Stahlelemente vorzusehen, die in klemmender Weise mit dem jeweiligen Randbereich in Wirkverbindung bringbar sind. Die Stahlelemente können bedarfsweise mit dem Dichtelement durch Vulkanisieren verbunden sein.

Der Erfindungsgegenstand ist anhand eines Ausführungsbeispieles in der Zeichnung dargestellt und wird wie folgt beschrieben. Es zeigen:
- Figur 1: Draufsicht einer erfindungsgemäßen Flachdichtung
- Figur 2: Prinzipskizze einer mehrlagigen Zylinderkopfdichtung samt angedeutetem Dichtelement;
- Figur 3: Dichtelement mit unterschiedlichen Positionier-/Zentrierelementen;

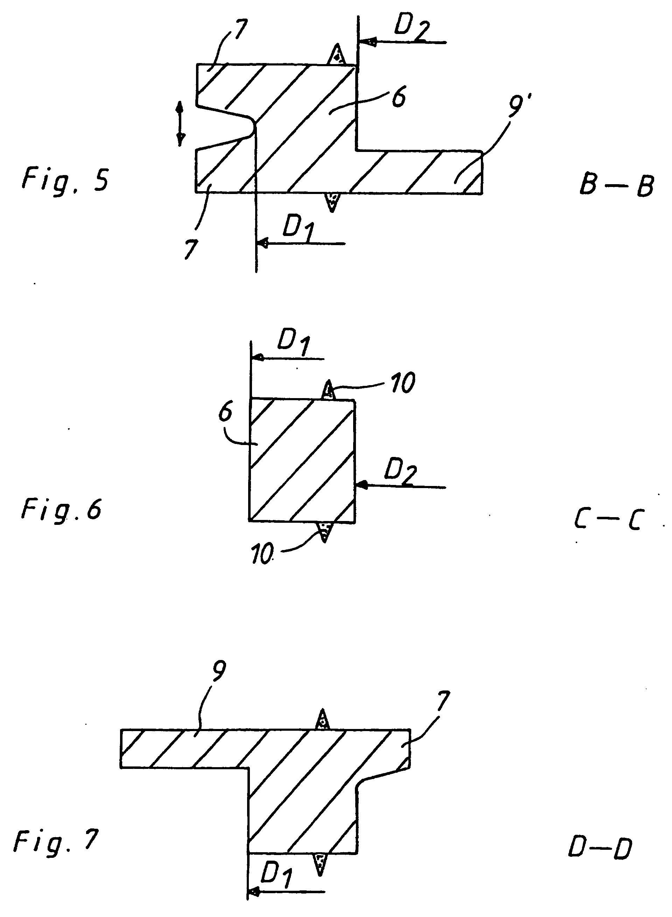

- Figuren 4 bis 7: Unterschiedliche Schnitte durch das Dichtelement gemäß Figur 3.

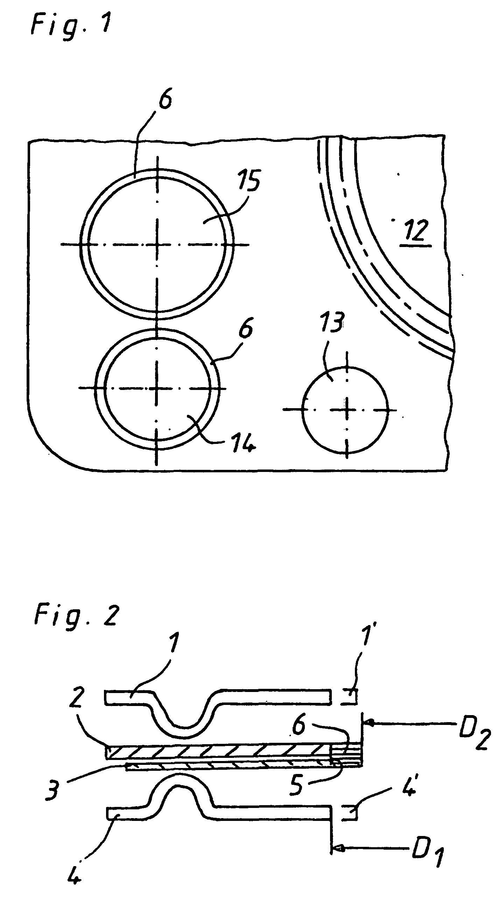

Die Figur 1 zeigt eine metalllische Zylinderkopfdichtung in der Aufsicht. Die Dichtung ist kann als Einlagen- oder Mehrlagendichtung ausgebildet sein.

Die Zylinderkopfdichtung weist mehrere Durchgangsöffnungen 12,13,14,15 für Brennräume 12, Befestigungsschrauben 13, für das Schmiermittel 14 und für das Kühlmittel 15 auf.

Die Durchgangsöffnungen 14,15 für das Schmiermittel und das Kühlmittel weisen je ein Dichtelement 6 auf.

Figur 2 zeigt als Prinzipskizze eine aus mehreren Lagen 1,2,3,4 gebildete Zylinderkopfdichtung im Querschnitt. Im Randbereich 5 einer nicht weiter dargestellten Durchgangsöffnung soll ein Dichtelement 6 positioniert werden. Die Innendurchmesser des Dichtelementes 6 sowie der Lagen 1 bis 4 sind mit D2, respektive mit D1 bezeichnet. Mit den Bezugszeichen 1', 4' ist angedeutet, dass diese Endbereiche radial bis über das Dichtelement 6 geführt sein können.

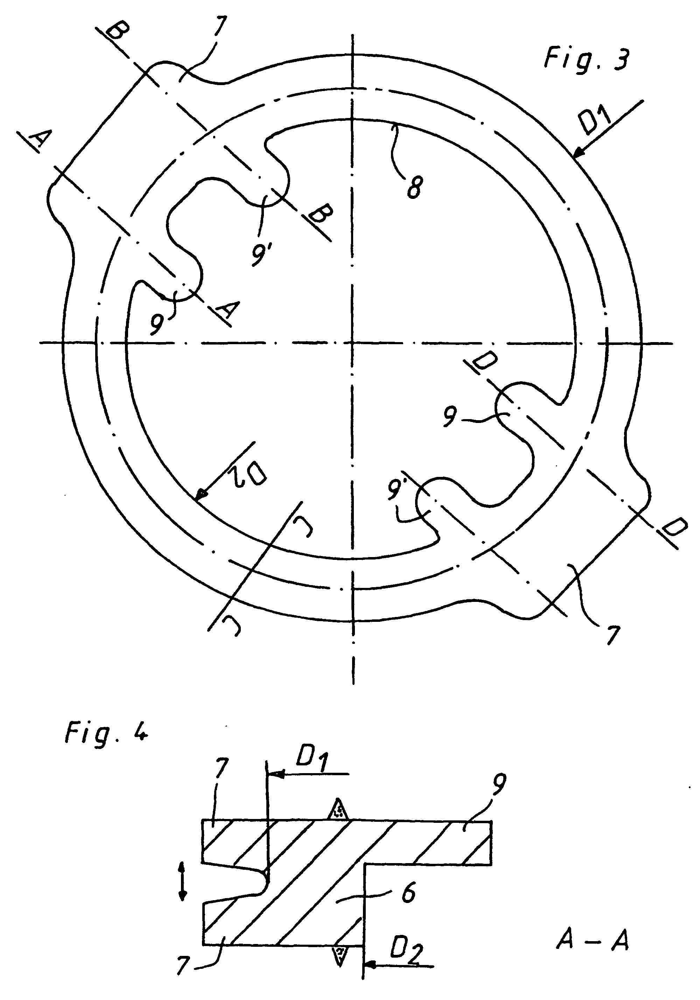

Figur 3 zeigt das Dichtelement 6 in der Draufsicht. Das Dichtelement 6 soll in diesem Beispiel aus einem Elastomermaterial bestehen, an welchem die U-förmig ausgebildeten Vorsprünge 7 einstückig angeformt sind. Auf der den Vorsprüngen 7 radial gegenüberliegenden Seite 8 des Dichtelementes 6 sind radial nach innen weisende laschenartig ausgebildete Ansätze 9,9' ebenfalls einstückig am Dichtelement 6 angeformt. Selbige sind, in Umfangsrichtung des Dichtelementes 6 gesehen, hintereinander angeordnet und auf unterschiedlichen axialen Ebenen vorgesehen. Selbiges wird durch die später abgehandelten Schnitte gemäß Linien A-A und B-B näher erläutert. Darüber hinaus sind am Dichtelement 6 weitere laschenartige Vorsprünge 7 angeformt. Die Vorsprünge 7 sind mit vorgebbarem Umfangswinkel zu den ersten Vorsprüngen 7 vorgesehen und wirken ebenfalls mit Ansätzen 9,9' zusammen.

Die Schnitte A-A bzw. B-B zeigen die Anordnung der laschenartigen Ansätze 9,9' des Dichtelementes 6. Ferner erkennbar sind die im Querschnitt U-förmig ausgebildeten laschenartigen Vorsprünge 7. Durch Zusammendrücken der Ansätze 9,9' kann über die radiale Hebelwirkung eine Aufspreizung der Vorsprünge 7 herbeigeführt werden, die es ermöglicht, dass die Vorsprünge 7 problemlos auf einen der Randbereiche 5 einer der Lagen 1,2,3 oder 4 aufgebracht werden kann. Nach Loslassen der Ansätze 9,9' wird die Aufspreizung aufgehoben und die Vorsprünge legen sich in dichtender Weise auf dem jeweiligen Randbereich 5 auf.

Der Schnitt C-C zeigt den Ringbereich außerhalb der Vorsprünge 7, respektive Ansätze 9,9' des Dichtelementes 6. Das Dichtelement 6 ist stirnseitig mit zusätzlichen umlaufenden Dichtrippen 10 versehen sein. Diese können auch bei den anderen Beispielen vorhanden sein.

Der Schnitt D-D ist entsprechend dem Schnitt A-A zu werten und zeigt ebenfalls einstückig aus dem Dichtelement 6 herausgeformte Vorsprünge 7 sowie Ansätze 9, die als Auflageelemente auf einer der Lagen 1,2,3 oder 4 dienen.

## Patentansprüche

1. Flachdichtung, insbesondere Zylinderkopfdichtung, für Verbrennungskraftmaschinen mit in Durchgangsöffnungen, insbesondere Flüssigkeitsdurchgangsöffnungen, eingesetzten, an den Öffnungsrändern (5) der Durchgangsöffnungen befestigten Dichtelementen (6), wobei am, dem jeweiligen Öffnungsrand (5) zugewandten Umfangsbereich der Dichtelemente (6), den Öffnungsrand (5) zumindest partiell umgreifende Vorsprünge (7) vorgesehen sind, **dadurch gekennzeichnet, dass** an mindestens einem den Vorsprüngen (7) radial etwa gegenüberliegenden Umfangsbereich (8) radial nach innen weisende Ansätze (9,9') vorgesehen sind, durch deren Betätigung eine in axialer Richtung wirkende Bewegung der Vorsprünge (7) herbeiführbar ist.

2. Flachdichtung nach Anspruch 1, **dadurch gekennzeichnet, dass** das Dichtelement (6) aus einem Elastomermaterial gebildet ist, an welches einerseits die laschenartig ausgebildeten Vorsprünge (7) und andererseits die ebenfalls laschenartig ausgebildeten Ansätze (9,9') einstückig angeformt, insbesondere anvulkanisiert sind.

3. Flachdichtung nach Anspruch 1 oder 2, **dadurch gekennzeichnet, dass** die Ansätze (9,9') auf gleicher axialer Höhe, wie die Vorsprünge (7) vorgesehen sind.

4. Flachdichtung nach Anspruch 1 oder 2, **dadurch gekennzeichnet, dass** die Ansätze (9,9') auf unterschiedlichen axialen Höhen, in Umfangsrichtung des Dichtelementes (6) gesehen, nebeneinanderliegend angeordnet sind.

5. Flachdichtung nach einem der Ansprüche 1 bis 4, **dadurch gekennzeichnet, dass** außerhalb der Vorsprünge (7)/Ansätze (9,9') weitere in Umfangsrichtung versetzt dazu vorgesehene Vorsprünge (7), gegebenenfalls in Verbindung mit weiteren Ansätzen (9,9'), am Umfang des Dichtelementes (6) vorgesehen sind.

6. Flachdichtung nach einem der Ansprüche 1 bis 5, **dadurch gekennzeichnet, dass** auch die weiteren Vorsprünge (7) sowie Ansätze (9,9') aus Elastomermaterial gebildet sind.

7. Flachdichtung nach einem der Ansprüche 1 bis 6, **dadurch gekennzeichnet, dass** das Dichtelement (6) im Bereich mindestens einer Stirnseite mit einer umlaufenden Dichtrippe (10) versehen ist.

## Claims

1. Flat gasket, in particular a cylinder head gasket, for internal combustion engines, with sealing elements (6) which are inserted in through-openings, in particular liquid through-openings, and are mounted on the opening edges of the through-openings, projections (7) being provided which at least partially encompass the opening edge (5) at the circumferential region of the sealing elements (6) which is orientated towards the respective opening edge (5), **characterised in that** extensions (9, 9'), which point radially inwardly, are provided on at least one circumferential region (8) which is situated approximately radially opposite the projections (7), by means of the actuation of which extensions a movement of the projections (7) which operates in the axial direction can be produced.

2. Flat gasket according to claim 1, **characterised in that** the sealing element (6) is formed from an elastomer material, on which material on the one hand the projections (7), which have a strap-like configuration, and on the other hand the extensions (9, 9'), which likewise have a strap-like configuration, are moulded-on in one piece, in particular vulcanised-on.

3. Flat gasket according to claim 1 or 2, **characterised in that** the extensions (9, 9') are provided at the same axial height as the projections (7).

4. Flat gasket according to claim 1 or 2, **characterised in that** the extensions (9, 9') are disposed situated next to each other at different axial heights, observed in the circumferential direction of the sealing element (6).

5. Flat gasket according to one of the claims 1 to 4, **characterised in that**, outwith the projections (7)/extensions (9, 9'), further projections (7) which are provided offset thereto in the circumferential direction are provided, if necessary in conjunction with further extensions (9, 9'), on the circumference of the sealing element (6).

6. Flat gasket according to one of the claims 1 to 5, **characterised in that** the further projections (7) and extensions (9, 9') are also formed from elastomer material.

7. Flat gasket according to one of the claims 1 to 6, **characterised in that** the sealing element (6) is provided in the region of at least one front side with a circumferential sealing rib (10).

## Revendications

1. Garniture d'étanchéité plate, en particulier garniture d'étanchéité de culasse, pour des moteurs à combustion interne avec des éléments étanches (6) montés dans des orifices de passage, en particulier des orifices de passage de liquide, sur les bords d'ouverture (5) des orifices de passage, moyennant quoi il est prévu dans la zone périphérique des éléments étanches (6) dirigés vers le bord d'ouverture (5) concerné, des parties en saillie (7) enveloppant au moins partiellement le bord d'ouverture (5), **caractérisé en ce que**, dans au moins une zone périphérique (8) à peu près radialement opposée aux parties en saillie (7), il est prévu des épaulements orientés vers l'intérieur (9, 9') dont l'actionnement peut provoquer un déplacement des parties en saillie (7) agissant dans la direction axiale.

2. Garniture d'étanchéité plate selon la revendication 1, **caractérisé en ce que** l'élément étanche (6) est constitué d'une matière élastomère sur laquelle, d'une part, les parties en saillie (7) configurées comme des colliers et, d'autre part, les épaulements (9, 9') également configurés comme des colliers sont façonnés en une seule pièce, en particulier sont vulcanisés.

3. Garniture d'étanchéité plate selon la revendication 1 ou 2, **caractérisé en ce que** les épaulements (9, 9') sont prévus à la même hauteur axiale que les parties en saillie (7).

4. Garniture d'étanchéité plate selon la revendication 1 ou 2, **caractérisé en ce que** les épaulements (9, 9') sont placés les uns à côté des autres à des hauteurs axiales différentes, vus dans la direction périphérique de l'élément étanche (6).

5. Garniture d'étanchéité plate selon l'une quelconque des revendications 1 à 4, **caractérisé en ce que**, à l'extérieur des parties en saillie (7)/épaulements (9, 9'), d'autres parties en saillie (7) décalées par rapport à ceux-ci, sont éventuellement prévues en liaison avec d'autres épaulements (9, 9') sur le pourtour de l'élément étanche (6).

6. Garniture d'étanchéité plate selon l'une quelconque des revendications 1 à 5, **caractérisé en ce que** les autres parties en saillie (7) ainsi que les autres épaulements (9, 9') sont également constitués d'une matière élastomère.

7. Garniture d'étanchéité plate selon l'une quelconque des revendications 1 à 6, **caractérisé en ce que** l'élément étanche (6) est muni d'une nervure étanche circulaire (10) dans la zone d'au moins une face frontale.
